# EUROPÄISCHE PATENTSCHRIFT

(11) **EP 2 625 755 B1**
(45) Veröffentlichungstag und Bekanntmachung des Hinweises auf die Patenterteilung: **26.10.2016**
(21) Anmeldenummer: 11761377.8
(22) Anmeldetag: 27.09.2011
(51) Int. Cl.: H01T 1/14, H01C 7/12, H02H 9/04

(54) **ÜBERSPANNUNGSSCHUTZVORRICHTUNG**
SURGE PROTECTION DEVICE
DISPOSITIF DE PROTECTION CONTRE LES SURTENSIONS

(30) Priorität: 04.10.2010 DE 102010047244
(43) Veröffentlichungstag der Anmeldung: 14.08.2013
(73) Patentinhaber: Phoenix Contact GmbH & Co. KG, 32825 Blomberg (DE)
(72) Erfinder: SCHIMANSKI, Joachim, 32760 Detmold (DE); WETTER, Martin, 32760 Detmold (DE); WOLFF, Gerhard, 32699 Extertal (DE)
(74) Vertreter: Michalski Hüttermann & Partner Patentanwälte mbB
(86) Internationale Anmeldenummer: PCT/EP2011/066739
(87) Internationale Veröffentlichungsnummer: WO 2012/045610

(56) Entgegenhaltungen:
- EP-A1- 1 447 831
- EP-A2- 0 350 477
- WO-A1-2008/080667
- DE-A1-102007 051 854
- US-A1- 2009 103 218

## Beschreibung

Im Fall einer transienten Überspannung oder einer Blitzstromentladung soll der Ableiter die auftretenden hohen Ströme und/oder Spannungen gegen Erde ableiten, um Netzbereiche, die hinter dem Ableiter liegen, vor den hohen Strömen und/oder Spannungen zu schützen.

Es ist bekannt, dass sich durch (mehrfache) Ableitvorgänge oder auch besonders hohe Stoßströme und/oder Stoßspannungen der Ableiter infolge von Überlastung bzw. in Folge von Alterungsprozessen unzulässig stark erwärmen kann.

Nicht nur aus Brandschutzgründen wird daher in der Regel eine integrierte "Temperatursicherung" vorgesehen, die den Überspannungsableiter in solchen Fällen von Netz abtrennt oder kurzschließt.

Um die erhöhte Temperatur des Ableiters zu erkennen und schalttechnisch abzufangen werden in der Regel Sensoren auf der Basis von schmelzenden Loten verwendet und es kommt zu einem im Westlichen mechanischen Abschaltvorgang (siehe z.B. DE 10 2007 051 854)

Eine Überspannungsschutzvorrichtung, gemäß Oberbegriff des Anspruchs 1 ist aus EP 1447 831 A1 bekannt.

Dabei ist bei einer Abtrennung nachteilig, dass sich am Schaltelement insbesondere bei hohen Netzfolgeströmen ein Lichtbogen ausbildet, der weitere Schäden anrichten kann, und im Übrigen schwer kontrolliert werden kann. Dies kann dazu führen, dass eine eigentlich gewünschte unverzügliche Abtrennung des erhitzten Ableiters vom Netz verhindert wird.

Dieser Lichtbogen stellt bei Wechselströmen in der Regel kein allzu großes Problem dar, da es innerhalb einer halben Periode des Wechselstroms - quasi automatisch - zu einer Löschung des Lichtbogens kommt, nämlich dann, wenn der Strom gleich "Null" ist, d.h. beim Nulldurchgang des Wechselstroms.

Bei Gleichstromanwendungen hingegen ist ein solcher Nulldurchgang nicht vorhanden.

Somit fehlt es an einem automatisches Löschvermögen für Lichtbögen bei Gleichstrom bei den bekannten Ableitern.

Dies ist insbesondere dann ein Problem, wenn die Gleichspannungen sehr hoch sind, wie beispielsweise in Photovoltaik-Anwendungen (siehe auch DE 10 2007 015 933).

Photovoltaik-Anwendungen stellen insgesamt eine Herausforderung dar, da sich Photovoltaik-Anlagen in der Regel in exponierter Lage auf dem Dach befinden. Dort sind sie besonders vor Blitzeinschlägen zu schützen. Weiterhin sind die in diesen Anlagen anzufindenden Wechselrichter anfällig für eingekoppelte Überspannungen.

Weiterhin ist festzustellen, dass Überspannungsschutzvorrichtungen für Ableiter der vorbezeichneten mechanisch integrierten Art mit wachsenden Stromschaltfähigkeiten erheblich teurer werden.

Ziel der Erfindung ist es eine Überspannungsschutzvorrichtung zur Verfügung zu stellen, die einen oder mehrere Nachteile aus dem Stand der Technik vermeidet.

Die Aufgabe wird gelöst durch eine Überspannungsschutzvorrichtung gemäß Anspruch 1. Weitere vorteilhafte Ausgestaltungen sind Gegenstand der abhängigen Ansprüche und der nachfolgenden Beschreibung.

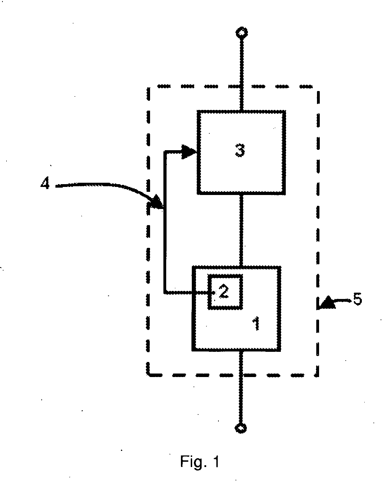

Nachfolgend wird die Erfindung näher anhand der Figur 1 erläutert.

Figur 1 zeigt eine beispielhafte, stark schematisierte Schaltungsanordnung gemäß der Erfindung.

In einer Ausführungsform der Erfindung weist die Überspannungsschutzvorrichtung 5 einen Ableiter 1 auf, wobei der Ableiter 1 im Einsatz eine Überspannung bzw. einen Stoßstrom, beispielsweise gegen Erde, ableiten soll, d.h. einen Ausgleich zwischen verschiedenen Potentialen herstellen und einen Stoßstrom ableiten soll. Dabei ist am Ableiter 1 ein Sensor 2 vorgesehen, wobei der Sensor 2 ein elektrisches Abschaltsignal 4 generiert. Eine relativ zum Ableiter 1 gesehen externe Schalteinrichtung 3 empfängt das elektrische Abschaltsignal 4 und trennt daraufhin den Ableiter 1 von einem Stromkreis, wobei die Schalteinrichtung 3 und der Ableiter 1 räumlich getrennt angeordnet sind.

Ein Sensor 2 kann dabei durch eine Messbrücke, insbesondere eine Wheatstonsche Messbrücke, einen Temperatursensor, einen Drucksensor, einen thermischen Abtrennungshilfskontakt oder eine Kombination hiervon beispielhaft verwirklicht sein.

In einer weiteren Fortbildung der Erfindung weist der Sensor 2 eine Messbrücke auf, die z.B. einen Komparator, einen Schwellwertschalter, einen Verstärkerschalter, oder dergleichen ansteuert.

Dieser Sensor 2 kann beispielsweise eine Widerstandsmessbrücke aufweisen.

Besonders sinnvoll ist hier die Bereitstellung eines Sensors 2 mit mindestens einem thermisch veränderlichen Widerstand (PTC, NTC). Sinnvolle Anordnungen sind beispielsweise Wheatstonesche Messbrücken.

Von Vorteil ist es den Sensor 2 von einer externen Spannungsversorgung versorgbar auszugestalten, so dass das Schaltverhalten unabhängig von dem geschalteten Netzabschnitt wird. Diese Spannungsversorgung kann auch batteriegestützt ausgeführt sein.

Eine Schalteinrichtung 3 kann dabei durch einen mechanischen oder halbleiterbasierten Gleichstromlast- bzw. Gleichstromleistungs- Schalter beispielhaft verwirklicht sein.

In einer weiteren Fortbildung der Erfindung wird das elektrische Abschaltsignal 4 anderen Einrichtungen zur Abschaltung bzw. zur Auswertung zur Verfügung gestellt. Dieses Signal 4 kann sowohl zur Signalisierung als auch zur Abschaltung größerer Anlagen herangezogen werden. Weiterhin kann das Signal 4 zur Frühwarnung, Fernwartung, Auslösen einer Schalteinrichtung 3, Auslösen eines Trennschalters 3 in Gleichspannungsanwendungen, insbesondere in Photovoltaik-Anlagen, verwendet werden.

Ein Ableiter 1 kann durch einen Varistor, eine Funkenstrecke, ein Halbleiterbauelement oder eine Kombination hiervon beispielhaft verwirklicht sein und zum Beispiel ein Blitzstromableiter vom Typ 1 sein.

In der vorgestellten erfindungsgemäßen Überspannungsschutzvorrichtung 5 wird der Schaltvorgang rein elektrisch 4 ausgelöst, so dass bisherige Nachteile aus dem Stand der Technik, insbesondere bezüglich der Stabilität von Kontaktstellen bei einer mechanischen Trennung bzw. bezüglich der Kosten bzw. bezüglich der Gleichstromlöschfähigkeit, umgangen werden.

Besonders vorteilhaft ist es, wenn die Überspannungsschutzvorrichtung 5 auf bestehende Schaltelemente 3 zurückgreifen kann.

Es versteht sich von selbst, dass mit der Schalteinrichtung 3 nicht nur der zu schützende Ableiter 1, sondern auch eine komplexere Anlage, getrennt werden können.

Weiterhin kann vorgesehen sein, dass ein Sensorausgang eines bestehenden Ableiters 1, insbesondere ein vorhandener Hilfskontakt des Ableiters, als ein elektro-mechanisches Schaltmittel für die elektrische Ansteuerung 4 der Schalteinrichtung 3 herangezogen wird.

Hierbei kann z.B. ein elektro-mechanisches Schaltmittel 2 vorgesehen sein, welches aus einem mechanischen Abschalten ein elektrisches Signal 4 generiert, welches zur Abschaltung verwendet wird.

Dies ist insbesondere dann von Vorteil, wenn eine Trenn-Einrichtung 1 mit Signalisierungsausgang bereits vorhanden ist. Dieser Signalisierungsausgang 2 wandelt ein mechanisches Schaltsignal in elektrisches Signal 4. Hierdurch kann für Gleichspannungsanlagen eine kostengünstige Nachrüstung ermöglicht werden, wobei nun die bestehende Schalteinrichtung 3 unter elektrischer Steuerung 4 vermittels eines bestehenden Ableiters 1 ausgelöst wird, aber dennoch eine Löschung bewirkt wird. Dabei wird entweder auf einen bestehenden Hilfskontakt des Ableiters 1 und/oder auf einen nachgerüsteten Sensor 2 zurückgegriffen.

Die Erfindung erlaubt es durch Einsatz eines Gleichstromlast- bzw. Gleichstromleistungs- Schalters 3, der elektrisch 4 angesteuert wird, eine kostengünstige Vorrichtung 5 bereitzustellen, die auf kostengünstige Ableiter 1 und Gleichstromlast- oder Gleichstromleistungsschalter 3 zurückgreifen kann.

Ohne weiteres können der Sensor 2 und der Ableiter auch integriert ausgeführt sein.

### Bezugszeichenliste

- Ableiter: 1
- Sensor: 2
- Schalteinrichtung: 3
- Abschaltsignal: 4
- Überspannungsschutzvorrichtung: 5

## Patentansprüche

1. Überspannungsschutzvorrichtung (5) aufweisend einen Ableiter (1), wobei
der Ableiter im Einsatz einen Ausgleich zwischen verschiedenen Potentialen herstellen und einen Stoßstrom ableiten soll, und am Ableiter (1) ein Sensor (2) vorgesehen ist, und
der Sensor ein elektrisches Abschaltsignal (4) generiert, dass eine Schalteinrichtung (3) das Abschaltsignal (4) empfängt und den Ableiter (1) von einem Stromkreis trennt, **dadurch gekennzeichnet, dass**
die Schalteinrichtung (3) und der Ableiter (1) räumlich getrennt voneinander angeordnet sind, und
der Sensor (2) eine Messbrücke aufweist und die Messbrücke eine Wheatstonesche Messbrücke ist.

2. Überspannungsschutzvorrichtung gemäß Anspruch 1, **dadurch gekennzeichnet, dass** der Sensor (2) einen elektro-mechanisches Schaltmittel aufweist.

3. Überspannungsschutzvorrichtung gemäß Anspruch 1 oder 2, **dadurch gekennzeichnet, dass** der Sensor (2) einen Temperatursensor und/oder einen Drucksensor aufweist.

4. Überspannungsschutzvorrichtung gemäß einem der vorhergehenden Ansprüche 1 oder 3, **dadurch gekennzeichnet, dass** der Sensor (2) mindestens einen thermisch veränderlichen Widerstand (PTC, NTC) aufweist.

5. Überspannungsschutzvorrichtung gemäß einem der vorhergehenden Ansprüche, **dadurch gekennzeichnet, dass** der Sensor (2) von einer externen Spannungsversorgung versorgbar ist.

6. Überspannungsschutzvorrichtung gemäß einem der vorhergehenden Ansprüche, **dadurch gekennzeichnet, dass** die Schalteinrichtung (3) ein Gleichstromlastschalter bzw. eine Gleichstromleistungsschalter ist.

7. Überspannungsschutzvorrichtung gemäß einem der vorhergehenden Ansprüche, **dadurch gekennzeichnet, dass** das elektrisches Abschaltsignal (4) anderen Einrichtungen zur Abschaltung bzw. zur Auswertung zur Verfügung gestellt wird.

8. Überspannungsschutzvorrichtung gemäß einem der vorhergehenden Ansprüche, **dadurch gekennzeichnet, dass** der Ableiter (1) ein varistor und/oder eine Funkenstrecke und/oder ein Halbleiterbauelement aufweist.

## Claims

1. A surge protection device (5) comprising an arrester (1), wherein
the arrester should produce an equalisation between different potentials and arrest a surge current during use, and a sensor (2) is provided on the arrester (1), and
the sensor generates an electrical disconnection signal (4), and a switching device (3) receives the disconnection signal (4) and separates the arrester (1) from an electric circuit, **characterised in that**
the switching device (3) and the arrester (1) are arranged so as to be spatially separated from one another, and
the sensor (2) comprises a measuring bridge and the measuring bridge is a Wheatstone bridge.

2. The surge protection device according to claim 1, **characterised in that** the sensor (2) comprises an electromechanical switching means.

3. The surge protection device according to claim 1 or 2, **characterised in that** the sensor (2) comprises a temperature sensor and/or a pressure sensor.

4. The surge protection device according to any one of the preceding claims 1 or 3, **characterised in that** the sensor (2) comprises at least one thermally varying resistor (PTC, NTC).

5. The surge protection device according to any one of the preceding claims, **characterised in that** the sensor (2) can be powered by an external power supply.

6. The surge protection device according to any one of the preceding claims, **characterised in that** the switching device (3) is a DC load break switch or a DC circuit breaker.

7. The surge protection device according to any one of the preceding claims, **characterised in that** the electrical disconnection signal (4) is made available to other devices for disconnection or for evaluation.

8. The surge protection device according to any one of the preceding claims, **characterised in that** the arrester (1) comprises a varistor and/or a spark gap and/or a semiconductor component.

## Revendications

1. Dispositif de protection contre les surtensions (5) présentant un parafoudre (1), où
le parafoudre en fonctionnement doit établir un équilibre entre différents potentiels et dériver un courant de surcharge, et un capteur (2) est prévu sur le parafoudre (1), et
le capteur génère un signal de coupure (4) électrique de sorte qu'un dispositif de commutation (3) reçoit le signal de coupure (4) et déconnecte le parafoudre (1) d'un circuit électrique, **caractérisé en ce que**
le dispositif de commutation (3) et le parafoudre (1) sont disposés séparés dans l'espace, et
le capteur (2) présente un pont de mesure et le pont de mesure est un pont de mesure de Wheatstone.

2. Dispositif de protection contre les surtensions selon la revendication 1, caractérisé en ce le capteur présente un moyen de commutation électromécanique.

3. Dispositif de protection contre les surtensions selon la revendication 1 ou 2, **caractérisé en ce que** le capteur (2) présente un capteur de température et/ou un capteur de pression.

4. Dispositif de protection contre les surtensions selon l'une des revendications 1 ou 3, **caractérisé en ce que** le capteur (2) présente au moins une résistance variable avec la température (à coefficient de température positif PTC, à coefficient de température négatif NTC).

5. Dispositif de protection contre les surtensions selon l'une des revendications précédentes, **caractérisé en ce que** le capteur (2) peut être alimenté par une source de courant externe.

6. Dispositif de protection contre les surtensions selon l'une des revendications précédentes, **caractérisé en ce que** le dispositif de commutation (3) est un commutateur de charge de courant continu, respectivement un disjoncteur de courant continu.

7. Dispositif de protection contre les surtensions selon l'une des revendications précédentes, **caractérisé en ce que** le signal de coupure (4) électrique est mis à la disposition d'autres dispositifs pour la coupure, respectivement l'exploitation.

8. Dispositif de protection contre les surtensions selon l'une des revendications précédentes, **caractérisé en ce que** le parafoudre (1) présente une varistance et/ou un éclateur et/ou un composant semiconducteur.
